# EUROPÄISCHE PATENTSCHRIFT

(11) **EP 3 026 842 B1**
(45) Veröffentlichungstag und Bekanntmachung des Hinweises auf die Patenterteilung: **19.10.2022**
(21) Anmeldenummer: 15003341.3
(22) Anmeldetag: 23.11.2015
(51) Int. Cl.: H04L 9/32, H04L 9/40

(54) **VERFAHREN UND SYSTEM ZUR SIGNATURERSTELLUNG**
METHOD AND SYSTEM FOR SIGNATURE CREATION
MÉTHODE ET SYSTÈME DE LA CRÉATION DE SIGNATURE

(30) Priorität: 26.11.2014 DE 102014017528
(43) Veröffentlichungstag der Anmeldung: 01.06.2016
(73) Patentinhaber: Giesecke+Devrient Mobile Security GmbH, 81677 München (DE)
(72) Erfinder: Schuster, Helmut, 87660 Irsee (DE)
(74) Vertreter: Giesecke + Devrient IP

(56) Entgegenhaltungen:
- DE-A1- 10 152 462
- DE-A1-102004 046 847
- US-A1- 2008 235 200
- US-A1- 2011 103 586
- US-A1- 2012 314 856
- "EMV - Integrated Circuit Card Specifications for Payment Systems. Book 2: Security and Key Management", INTERNET CITATION, 1 June 2008 (2008-06-01), page 176pp, XP007913922, Retrieved from the Internet: URL:http://www.iro.umontreal.ca/~salvail/s ecurite/notes2010/EMVv4.2Book2.pdf [retrieved on 1077]

## Beschreibung

Die vorliegende Erfindung betrifft ein Verfahren in einer Kommunikationsschnittstelle zur Erstellung einer Signatur sowie eine entsprechende Vorrichtung mit einer Kommunikationsschnittstelle.

Die Kommunikationsschnittstelle einer Vorrichtung mit Steuereinheit und Kommunikationsschnittstelle überträgt Daten der Steuereinheit in der Regel transparent an eine externe Einheit. Die gesendeten Daten der Steuereinheit können dabei eine digitale Signatur enthalten.

Zur Erstellung einer digitalen Signatur sind Sicherheitsmodule bekannt, welche ein Signatur-Kommando, in welchem vorzugsweise ein Hashwert der zu signierender Daten enthalten ist, empfangen.

Ferner ist es bekannt, ein Sicherheitsmodul zur Absicherung einer lokalen Kommunikation zwischen einer Vorrichtung, in welcher das Sicherheitsmodul enthalten ist, und einem externen Kommunikationspartner einzusetzen. Das Sicherheitsmodul verwendet dann typischerweise einen symmetrischen Schlüssel, um alle zu übertragenden Daten zu verschlüsseln und/oder einen Prüfwert (MAC) für die jeweils zu übertragenden Daten zu erzeugen, bevor die derart abgesicherten Daten über die Schnittstelle der Vorrichtung übertragen werden.

Die meisten Verfahren sind dabei unflexibel, da entweder die zu verwendenden Schlüssel und Algorithmen durch die jeweilige Anwendung vorgegeben sind oder die Schlüsselverwaltung komplex ist.

US 2012/314856 A1 offenbart eine Verwendung von impliziten Zertifikaten, auf die zugegriffen wird. Das Zertifikat ist einer Einheit zugeordnet und wird durch eine Zertifikatsauthorität erzeugt. Das Zertifikat enthält einen Wert zur Wiederherstellung eines öffentlichen Schlüssels der Einheit. Auf die Information des öffentlichen Schlüssels der Zertifikatsauthorität wird zugegriffen. Die Information des öffentlichen Schlüssels der Zertifikatsauthorität ist der Zertifikatsauthorität zugeordnet, die das implizite Zertifikat ausgegeben hat. Ein erster Wert wird erzeugt basierend auf einer Bewertung einer Hash-Funktion. Die Hash-Funktion wird bewertet auf der Basis der Information des öffentlichen Schlüssels der Zertifikatsauthorität und des Wiederherstellungswerts des öffentlichen Schlüssels der Einheit. Ein Wert eines öffentlichen Schlüssels der Einheit kann auf der Basis des ersten Wertes erzeugt oder anderweitig verwendet werden.

DE 10 2004 046847 A1 offenbart ein Verfahren zur Erzeugung einer digitalen Signatur für zu signierende Daten durch einen Benutzer mittels eines tragbaren Datenträgers, mit folgenden Schritten: Bestimmen von Identifikationsdaten für die zu signierenden Daten in einem Server, wobei die Identifikationsdaten aus den zu signierenden Daten ableitbar sind; Vergleichen der in dem Server bestimmten Identifikationsdaten mit Vergleichsdaten; Darstellen von zumindest einem Teil der zu signierenden Daten für den Benutzer; Erzeugen der digitalen Signatur in dem tragbaren Datenträger, wenn eine Freigabe der Signaturerzeugung durch den Benutzer nach dem Schritt des Darstellens erfolgt; Bestimmen von Anzeigedaten als Auswahl aus den zu signierenden Daten in dem Server, wobei in dem Schritt des Darstellens die Anzeigedaten dem Benutzer angezeigt werden.

DE 101 52 462 A1 offenbart ein Verfahren zur Signatur eines Dokuments mittels eines Signatursystems, das eine Ausgabeeinrichtung und ein Chipkartenterminal aufweist und das Daten mit einem Hintergrundsystem auszutauschen vermag, mit den durch das Signatursystem ausgeführten Schritten:
a) Senden des Dokuments an das Hintergrundsystem,
b) Empfangen von Kontrolldaten, die das Dokument und eine Kennung enthalten, vom Hintergrundsystem,
c) Anzeigen der Kennung durch das Chipkartenterminal,
d) Ausgeben des in den Kontrolldaten enthaltenen Dokuments zusammen mit der Kennung durch die Ausgabeeinrichtung, und
e) Berechnen von Signaturdaten durch das Chipkartenterminal in Reaktion auf eine Signaturfreigabe und Übertragen der Signaturdaten an das Hintergrundsystem.

US 2008/0235200 A1 offenbart ein Verfahren zur Verarbeitung von Mediendateien, welches einen Empfang einer ersten Signatur enthält. Die erste Signatur beschreibt eine erste Charakteristik einer ersten Mediendatei. Das Verfahren enthält auch eine Bestimmung, ob die erste Signatur mit einer der gespeicherten Signaturen übereinstimmt und in Reaktion auf die Bestimmung, dass die erste Signatur mit einer oder mehreren Signaturen übereinstimmt, eine zweite Signatur auf der Basis der ersten Mediendatei angefordert wird. Die zweite Signatur beschreibt eine zweite Charakteristik der ersten Mediendatei. Das Verfahren enthält auch die Bestimmung, ob die zweite Signatur mit einer zweiten Vielzahl von gespeicherten Signaturen übereinstimmt, und bei Vorliegen einer Übereinstimmung, eine Initiierung einer Wiederherstellung in Verbindung mit der ersten Mediendatei.

Es ist die Aufgabe der vorliegenden Erfindung, ein flexibles Verfahren zur Erstellung von Signaturen für eine Vorrichtung mit Steuereinheit und Kommunikationsschnittstelle bereitzustellen.

Diese Aufgabe wird erfindungsgemäß durch ein Verfahren sowie ein Vorrichtung mit den Merkmalen der unabhängigen Ansprüche gelöst. Die davon abhängigen Ansprüche beschreiben vorteilhafte Ausgestaltungen und Weiterbildungen der Erfindung.

Erfindungsgemäß werden in einer Kommunikations-Schnittstelle einer Vorrichtung, die ferner eine Steuereinheit umfasst, zu sendende Daten empfangen und transparent an eine externe Einheit gesendet. Die Vorrichtung stellt eine Signatur für zumindest einen Teil der gesendeten Daten bereit.

Die Signatur für die Daten wird in der Kommunikations-Schnittstelle erstellt und separat von der der Kommunikations-Schnittstelle an die externe Einheit gesendet.

Da die Daten zunächst transparent übertragen werden und die Signatur separat übertragen wird, ist das Verfahren flexibel einsetzbar, insbesondere ohne die Daten vorhandener Anwendungen und die Übertragung der Daten zu beeinflussen. Die Daten und die erstellte Signatur werden in voneinander getrennten bzw. unabhängigen Schritten gesendet.

Bevorzugt empfängt die Kommunikations-Schnittstelle von der externen Einheit eine Anforderung einer Kommunikations-Schnittstellen-Signatur für die zuvor transparent gesendeten Daten. Die Signatur wird erst nach der Anforderung durch die externe Einheit von der Kommunikations-Schnittstelle an die externe Einheit gesendet. Für eine externe Einheit ist die Signaturanforderung somit ein optionaler Schritt. Insbesondere eine Anpassung vorhandener externer Einheiten ist daher nicht erforderlich.

Der Schritt des Erstellens der Signatur kann bereits vor dem Schritt des Sendens der Daten oder während dem Senden erfolgen. Die Signatur wird somit für die zu sendenden Daten erstellt. In Antwort auf eine empfangene Signatur-Anforderung wird die zuvor erstellte Signatur gesendet. Bevorzugt wird jedoch die Signatur für die bereits gesendeten Daten erstellt. Der Schritt des Erstellens der Signatur erfolgt somit nach dem Schritt des transparenten Sendens. Der Schritt des Erstellens der Signatur für die bereits gesendeten Daten könnte vor dem Empfang der Signatur-Anforderung, für eine Signatur der Kommunikations-Schnittstelle, erfolgen. Auch hier wird in Antwort auf eine empfangene Signatur-Anforderung die zuvor erstellte Signatur gesendet. Das Senden einer bereits erstellten Signatur in Antwort auf die Anforderung reduziert (in beiden genannten Fällen) den für die vorliegende Lösung zusätzlich erforderlichen Zeitbedarf. Der Zeitbedarf kann insbesondere optimiert werden, wenn die Signaturerstellung parallel zum Senden (beispielsweise durch eine Zusatzeinheit) erfolgt oder in einer (z.B. protokollgemäß) frei verfügbaren Zeit zwischen anderen Schritten der Kommunikations-Schnittstelle erfolgt. Der Schritt der Signatur-Erstellung kann insbesondere zeitsparend erfolgen: zwischen dem Erhalten der Daten und dem transparentem Senden der erhaltenen Daten oder zwischen dem transparenten Senden und dem Empfang einer Signatur-Anforderung. Die Signatur (erst) nach dem Empfangen einer Signatur-Anforderung der externen Einheit zu erstellen, ist eine weitere Alternative. Eine Signatur für die gesendeten Daten wird in Antwort auf eine Anforderung - einer Signatur der Kommunikations-Schnittstelle für die gesendeten Daten - erstellt und an die externe Einheit gesendet. Die Signatur wird nur auf Anforderung erstellt, so dass das Verfahren für die Verwendung mit unterschiedlichen Kommunikations-Schnittstellen (mit oder ohne Zusatzhardwareeinheit bzw. mit, ohne oder mit unterschiedlichen protokollabhängigen, verfügbaren Zeiträumen) zeitlich optimiert wäre.

Vorzugsweise erfolgt ein Zwischenspeichern der gesendeten Daten in der Kommunikations-Schnittstelle. In dem Schritt des Erstellens der Signatur werden die zwischengespeicherten Daten signiert. Die Signatur wird somit unabhängig von der Steuereinheit erstellt.

Insbesondere können in dem Schritt des Erstellens der Signatur die Daten eines Ausgangspuffers der Kommunikations-Schnittstelle signiert werden. In der Kommunikations-Schnittstelle wird somit keine zusätzlicher Speicher benötigt, sondern vorhandene Mittel ausgenutzt.

Ein transparentes Senden bedeutet insbesondere ein unverändertes Senden. Die Kommunikations-Schnittstelle sendet die von der Steuereinheit empfangenen Daten quasi blind, also ohne den Inhalt der Daten zu kennen und/oder zu beeinflussen. Folglich sollte die erstellte Signatur nicht als Ersatz für eine Signatur von Anwendungsdaten verwendet werden. Ein Angreifer könnte, beispielsweise mit seiner eigenen auf der Steuereinheit laufenden Anwendung, auf Anwendungsebene theoretisch beliebige Daten übertragen und sich danach von der Schnittstelleneinheit signieren lassen.

Die erstellte Signatur ist vorzugsweise als ein - von der Steuereinheit unabhängiger - Nachweis für den Ursprung der gesendeten Daten vorgesehen. Der Nachweis erfordert keine Anpassung oder Mitwirkung der Steuereinheit. Zudem kann der Ursprung der gesendeten Daten verifiziert werden für Anwendungen, die auf einem anderen Ausführungsort als der Steuereinheit oder auf verschiedenen Ausführungsorten in der Vorrichtung ausgeführt werden. Das Verfahren ermöglicht die Erkennung einer Kopie einer Anwendung auf einer anderen Vorrichtung.

Die Vorrichtung kann mehrere Steuereinheiten umfassen. Beispielsweise ein Benutzerendgerät, vorzugsweise als Mobilfunkgerät, kann einen Anwendungsprozessor, ein fest eingebautes Sicherheitsmodul (TPM-Modul oder eSIM) und/oder ein reversibel einsetzbares Sicherheitsmodul umfassen. Steuereinheiten sind eingerichtet zur Ausführung von Anwendungen. Insbesondere kann auf die zumindest eine Steuereinheit nach Wahl des Benutzers eine beliebige Anwendung geladen werden. Mehrere gleichartige Anwendungen können auf unterschiedlichen Steuereinheiten der Vorrichtung vorliegen.

Insbesondere ist die Signatur als ein anwendungsunabhängiger Nachweis dafür vorgesehen ist, dass die Vorrichtung der Ursprung der gesendeten Daten ist. Mit Hilfe der Signatur kann für beliebige Anwendungen geprüft werden, ob die Daten von der Vorrichtung stammt.

Besonders vorteilhaft wird die Signatur als ein von dem Inhalt der signierten Daten unabhängiger Nachweis verwendet, dass die Vorrichtung der Ursprung der gesendeten Daten ist. Die gesendeten Daten umfassen gemäß einem Protokoll der Kommunikations-Schnittstelle einen Datenanteil (Inhalt) und einen Protokollanteil (Format). Der Protokollanteil ist durch das Protokoll der Kommunikations-Schnittstelle vorgegeben. In dem Schritt des Erstellens der Signatur werden die vollständigen in einem einzelnen Sendeschritt an die externe Einheit gesendeten Daten, also Datenanteil und Protokollanteil, signiert. Eine Verifikation der Signatur kann somit - unabhängig von dem Datenanteil in den gesendeten Daten - anhand des protokollgemäßen Anteils der gesendeten Daten verifiziert werden.

Bevorzugt ist der Vorrichtung eine eindeutige Identifikation zugeordnet. Die Identifikation kann eine Nummer (z.b. IMEI oder Schnittstellen-ID), ein Name (z.b. URL oder Schlüsselname) oder eine Adresse (z.b. IP-Adresse) sein. Die Identifikation ist der Vorrichtung irreversibel zugeordnet (und nicht veränderbar in der Vorrichtung gespeichert).

In dem Schritt des Erstellens wird ein geheimer Schlüssel der Kommunikations-Schnittstelle verwendet. Bevorzugt ist der geheime Schlüssel Teil eines asymmetrischen Schlüsselpaares, welches den geheimen Schlüssel und einen öffentlichen Schlüssel umfasst. Die erstellte Signatur kann mit dem öffentlichen Schlüssel der Kommunikations-Schnittstelle verifiziert werden.

Eine Prüfinstanz kann die erstellte Signatur mit Hilfe des öffentlichen Schlüssels der Kommunikations-Schnittstelle verifizieren. Die Prüfeinrichtung prüft somit den Ursprung der Daten mittels Verifikation der Signatur. Die Prüfinstanz kann mit Hilfe einer Identifikation der Vorrichtung einen öffentlichen Schlüssel der Kommunikations-Schnittstelle bestimmen, um die erstellte Signatur zu verifizieren.

Vorliegend kann die Signatur für die zuletzt gesendeten Daten von der Kommunikations-Schnittstelle angefordert werden, insbesondere zu jedem Zeitpunkt und/oder von jeder externen Instanz.

In einer sicheren Ausgestaltung wird die erstellte Signatur nach dem Signieren und/oder die gesendeten Daten vor dem Signieren mit einem Schlüssel einer Prüfinstanz verschlüsselt. Somit kann nur die Prüfinstanz die Signatur und/oder die gesendeten Daten entschlüsseln. Ein Ausspähen der Inhalte von gesendeten Daten, z.b. als Teil eines Angriffs auf eine auf der Vorrichtung ausgeführte Anwendung, durch Unbefugte wird somit vermieden. Die alternative Lösung, eine Signatur erst nach einer Authentisierung zu erstellen, wäre dagegen weniger flexibel und aufwändiger.

Die Kommunikations-Schnittstelle der Vorrichtung ist bevorzugt eine kontaktlose Schnittstelle. Besonders bevorzugt umfasst die Vorrichtung eine primäre Schnittstelle mit höherer Reichweite (Mobilfunk, WLAN) und die kontaktlose Kommunikations-Schnittstelle mit geringerer Reichweite (RFID, UHF, ...). Die kontaktlose Kommunikations-Schnittstelle sendet die Daten gemäß einem RFID-, NFC-, UHF- oder Low Energy Bluetooth-Protokoll.

Die vorliegende Vorrichtung kann eine tragbare Vorrichtung sein, vorzugsweise ein Mobilfunk-Endgerät, aber ebenso ein PDA, ein Tablet-Computer oder eine benutzergetragene Vorrichtung (Wearable Device) sein. Die Vorrichtung kann ebenso eine stationäre Vorrichtung, wie Terminal oder ähnliches, sein. Die Kommunikations-Schnittstelle ist ein fest mit der Vorrichtung verbundenes Teil der Vorrichtung und sollte vorliegend insbesondere gegen einen Ausbau aus der Vorrichtung gesichert sein.

Eine geeignete Prüfvorrichtung zur Prüfung von Kommunikations-Schnittstellen-Signaturen umfasst: eine Schnittstelle zum Empfangen von Kommunikations-Schnittstellen-Signaturen; eine Schlüsseleinheit, welche einen Schlüssel bereitstellt, der einer Kommunikations-Schnittstelle einer Vorrichtung zugeordnet ist; und eine Steuereinheit, welche für eine gegebene Vorrichtung den zugeordneten Schlüssel der Kommunikations-Schnittstelle mit Hilfe der Schlüsseleinheit bestimmt und eine empfangene Kommunikations-Schnittstellen-Signatur mittels des bestimmten Schlüssels verifiziert.

Die Prüfvorrichtung umfasst vorzugsweise einen Speicher, in welchem eine

Vielzahl von Schlüsseln gespeichert sind, welche Kommunikations-Schnittstellen von Vorrichtungen zugeordnet sind. Alternativ zum Schlüsselspeicher kann eine Schlüsselberechnungseinheit verwendet werden, welche für die Kommunikations-Schnittstelle den, vorzugsweise öffentlichen, Schlüssel der Kommunikations-Schnittstelle berechnen kann. Die Prüfvorrichtung wird als Prüfinstanz die bereits beschriebenen Schritte durchführen. Beispielsweise verifiziert sie die Signatur nur anhand des Protokollanteils der gesendeten Daten und/oder entschlüsselt die für ihn verschlüsselte Signatur/ Daten vor der Verifikation.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Figur 1: ein Ablaufdiagramm eines erfindungsgemäßen Verfahrens; und
- Figur 2: ein System mit einer erfindungsgemäßen Vorrichtung, einer externen Einheit und einer Prüfinstanz.

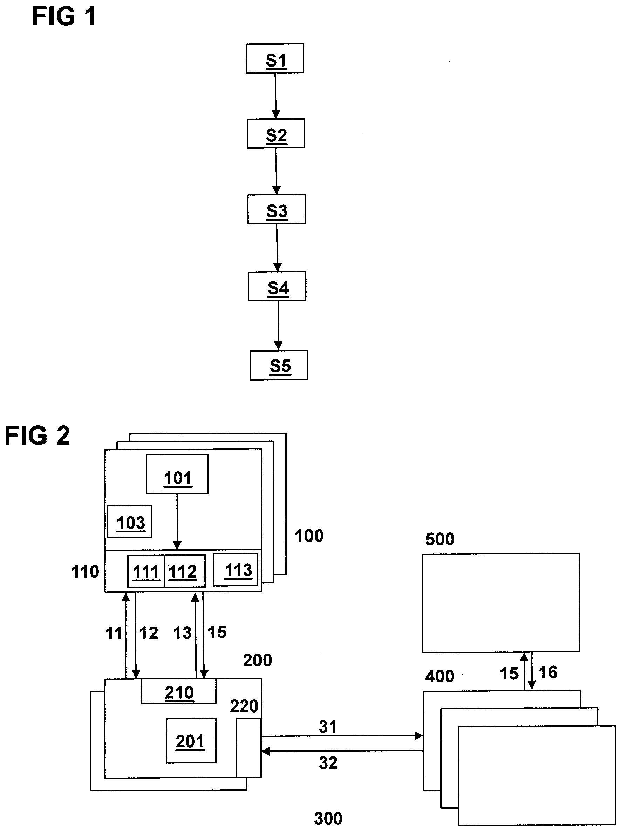

Zunächst wird mit Bezug auf Figur 2 kurz eine Vorrichtung mit Kommunikations-Schnittstelle beschrieben und ein mögliches System beschrieben.

Die Vorrichtung 100, beispielsweise ein Mobilfunkgerät, umfasst eine erste Steuereinheit 101 und eine Kommunikations-Schnittstelle 110, beispielsweise eine NFC-Einheit. Die Kommunikations-Schnittstelle 110 kommuniziert mit einer externen Einheit 200. Die an die externe Einheit 200 zu sendenden Daten erhält die Kommunikations-Schnittstelle 110 von der ersten Steuereinheit 101 oder von einer der weiteren Steuereinheiten 103 der Vorrichtung 100. Die weitere Steuereinheit 103 kann ein Sicherheitsmodul der Vorrichtung sein. Eine nicht gezeigte weitere Steuereinheit könnte in der Form eines Trusted Execution Environment (im Sinne der Global Platform-Spezifikation) vorliegen. Auf jeder Steuereinheit kann eine Anwendung ausgeführt werden, die gegebenenfalls Daten über die Kommunikations-Schnittstelle austauscht. Auf die Steuereinheit 110 können vom Benutzer der Vorrichtung unbeschränkt Anwendungen geladen werden. Beispielsweise kann der Benutzer beliebige Apps auf seinem Mobilfunkgerät installieren.

Die vorliegende Lösung ist von besonderem Interesse für Anwendungen, die auf einer nicht sicheren Steuereinheit ausgeführt werden. Zuletzt wurde vermehrt diskutiert Anwendungen, die sich wie ein Sicherheitsmodul (Karte) bzw. eine Anwendung eines Sicherheitsmoduls verhalten, auf der unsicheren Steuereinheit einer Vorrichtung auszuführen. Es wird dabei versucht die vertraulichen Daten der Anwendung, wie Schlüssel und Identifikationsdaten, soweit möglich ohne Hardware-Unterstützung abzusichern. Es liegt somit ein erhöhtes Risiko für ein erfolgreiches Ausspähen der vertraulichen Daten vor. Besonders schwer zu vermeiden ist das einfache Kopieren bzw. Klonen der Anwendung, mitsamt der vertraulichen Daten, auf eine andere Vorrichtung.

Wie in Figur 2 erkennbar tauschen die Vorrichtung 100 und die externe Einheit 200 lokal Daten aus. Die von der Vorrichtung 100 gesendeten Anwendungsdaten werden von einem entfernt angeordneten Server 400 der entsprechenden Anwendung verarbeitet. In der Regel prüft der Server die Anwendungsdaten mithilfe der vertraulichen Daten und führt eine entsprechende anwendungsbezogene Aktion aus, also z.b. eine Banktransaktion entsprechend den Zahlungsinformationen in den Anwendungsdaten. Der Server 400 könnte jedoch die gesendeten Anwendungsdaten einer Vorrichtung 100 nicht von Anwendungsdaten unterscheiden, die von einer identischen Kopie der Anwendung (inklusive der vertraulichen Daten) auf einer anderen, nicht gezeigten, Vorrichtung stammen.

Vorliegend wird die Kommunikations-Schnittstelle 110 angepasst, um beispielsweise solche Kopien von Anwendungen zu erkennen. Der Ablauf in der Kommunikations-Schnittstelle ist in Figur 1 dargestellt.

In Schritt S1 erhält die Kommunikations-Schnittstelle zu sendende Daten von der Steuereinheit der Vorrichtung. Die zu sendenden Daten werden von einer - auf dieser Steuereinheit oder einer anderen Steuereinheit der Vorrichtung ausgeführten - Anwendung erzeugt. Die erhaltenen Daten werden in Schritt S2 transparent an die externe Einheit gesendet.

Die Kommunikations-Schnittstelle ändert die erhaltenen Daten also nicht, sondern ergänzt maximal einen Protokollanteil zu den erhaltenen Daten (Datenanteil). Die gesendeten Daten umfassen einen Protokollanteil, der von dem Protokoll der Kommunikations-Schnittstelle vorgegeben ist sowie den Datenanteil. Der Datenanteil ist anwendungsabhängig. Der Datenanteil der gesendeten Daten ist vorgesehen für eine anwendungsbezogene Prüfung in einem Anwendungssystem, dem Server 400. Der Datenanteil kann eine Antwort auf eine Anforderung der externen Einheit 200 sein.

In Schritt S3 empfängt die Kommunikations-Schnittstelle eine Signatur-Anforderung von der externen Einheit. Die Kommunikations-Schnittstelle erstellt in Schritt S4 eine digitale Signatur für die zuletzt gesendeten Daten.

Die zuvor gesendeten Daten "host data" werden mit einem geheimen Schlüssel SK der Kommunikations-Schnittstelle signiert: *Signature := Encrypt (Cryptographic Hash Function (host data), SK).* Die erstellte Signatur kann mit einem öffentlichen Schlüssel der Kommunikations-Schnittstelle verifiziert werden: *Cryptographic Hash Function (host data) = Decrypt (Signature, PK).* Der geheime Schlüssel SK bildet mit dem öffentlichen Schlüssel der Kommunikations-Schnittstelle ein Schlüsselpaar eines asymmetrischen kryptographischen Algorithmus, wie beispielsweise RSA, elliptische Kurven oder Identitätsbasierte Algorithmen.

Die erstellte Signatur wird in Schritt S5 von der Kommunikations-Schnittstelle an die externe Einheit gesendet. In Schritt S5 kann optional eine Identifikation der Kommunikations-Schnittstelle oder der öffentliche Schlüssel PK der Kommunikations-Schnittstelle übertragen werden.

Der Schritt der Signaturerstellung S4 könnte - alternativ zu dem soeben beschriebenen Ablauf - vor dem Empfang S3 der Signatur-Anforderung bzw. sogar vor dem transparenten Senden S2 erfolgen, wenn die Kommunikations-Schnittstelle 110 entsprechend eingerichtet ist.

In einer weiteren Variante kann eine Signatur ohne Verwendung eines Hash-Algorithmus erstellt werden *Signature* := *Encrypt (host data, SK).* Die Signatur wird dann geprüft durch den Vergleich, ob *"host data" = Decrypt (Signature, PK).*

Weitere Details des Ablaufs aus Figur 1 werden im Folgenden für die entsprechend eingerichtete Kommunikations-Schnittstelle 110 aus Figur 2 beschreiben.

Das in Figur 2 dargestellte System umfasst eine Vielzahl von Vorrichtungen 100, eine Vielzahl von externen Einheiten 200, ein Netzwerk 300, eine Vielzahl von Anwendungsservern 400 sowie eine Prüfinstanz 500. Jede Vorrichtung 100 kann mehrere Anwendungen (Payment1, Payment2, Transit1, Transit2, Ticket1, ...) ausführen, die unterschiedlichen Anwendungssystemen zugeordnet sind. Die Anwendungen können auf unterschiedlichen Steuereinheiten 101,103 der Vorrichtung 100 ausgeführt werden. Die externen Einheiten 200 könnten ebenso mehrere Anwendungstypen (Payment1, Payment2, ...) unterstützen. In der Regel ist jedoch die externe Einheit 200 ein Anwendungsterminal eines gegebenen Anwendungssystems (Payment1). Der Anwendungsserver 400 des jeweiligen Anwendungssystems kann die von der Vorrichtung 100 gesendeten (anwendungsspezifischen) Daten verwerten. Der Anwendungsserver 400 wird also auf Basis der Daten beispielsweise eine Zahlung ausführen, eine Fahrt abrechnen oder ein Ticket prüfen.

Die externe Einheit 200 umfasst eine erste Schnittstelle 210, eine Steuereinheit 201 sowie eine Netzwerkschnittstelle 220 zu dem Netzwerk 300.

Gemäß einem herkömmlichen Ablauf sendet die externe Einheit 200, z.B. ein Zahlungsterminal mit einer NFC-Schnittstelle 210, eine (Zahlungs-) Anforderung 11 und empfängt daraufhin die von der (NFC-) Kommunikations-Schnittstelle 110 der Vorrichtung gesendeten (Zahlungs-)Antwortdaten 12. In der Vorrichtung hat eine auf der Steuereinrichtung 101 ausgeführte Anwendung für die Anforderung 11 die Antwortdaten 12 erzeugt. Die externe Einheit 200 leitet mindestens einen Teil der Antwortdaten 12 als Transaktionsdaten 31 über das Netzwerk 300 an den Anwendungsserver 400 weiter. Der Anwendungsserver 400 prüft die Transaktionsdaten 31, führt gegebenenfalls zugehörige Schritte, wie eine Überweisung, aus und sendet optional der externen Einheit 200 eine Bestätigung 32 für die die erfolgreiche Transaktion.

Die Kommunikations-Schnittstelle 110 der Vorrichtung 100 umfasst optional einen Eingangspuffer 111 und einen Ausgangspuffer 112. Für die vorliegende Lösung wird in der Kommunikations-Schnittstelle 110 eine Signaturerzeugungs-Einheit 113 vorgesehen. Die Signaturerzeugungs-Einheit 113 erstellt eine Signatur für die zuletzt gesendeten Daten. Insbesondere verwendet sie einen geheimen Schlüssel eines asymmetrischen Schlüsselpaares für die Signaturerzeugung, der vorzugsweise in der Kommunikations-Schnittstelle 110 gespeichert ist. Die zuletzt gesendeten Daten liegen im Ausgangspuffer 112 vor oder werden beim Senden (siehe S2 in Figur 1) für eine spätere Signaturerzeugung (S4 in Figur 1) in einem Zwischenspeicher zwischen gespeichert.

Die externe Einheit 200 kann von der Kommunikations-Schnittstelle 110 der Vorrichtung 100 eine Signatur für die gesendeten Daten 12 anfordern. Die Anforderung 13 einer Kommunikations-Schnittstellen-Signatur für zuletzt gesendete Daten wird in der Kommunikations-Schnittstelle 110 empfangen. Die Signaturerzeugungs-Einheit 113 erzeugt die Signatur für die zuvor transparent gesendeten Daten. In Antwort auf die Anforderung 13 sendet die Kommunikations-Schnittstelle 110 die erstellte Signatur 15 an die externe Einheit 200. Die erstellte Signatur 15 kann als Teil der Transaktionsdaten 31 weiter an den Anwendungsserver 400 übertragen werden.

Anzumerken ist, dass zunächst die Kommunikation 11, 12 mit einer Anwendung der Vorrichtung erfolgt (transparenter Modus) und danach eine direkte Kommunikation 13, 15 mit der Kommunikations-Schnittstelle 110 erfolgt (direkter Modus). Dadurch entsteht eine besonders flexible, insbesondere von den Steuereinheiten 101, 103 und deren Anwendungen unabhängige, Lösung.

In einer alternativen Ausgestaltung kann die Signaturerzeugungs-Einheit 113 angepasst sein, die Signatur bereits vor dem Empfang der Signatur-Anforderung zu erstellen. Sie kann hierfür beispielsweise als parallel zum Senden arbeitende Einheit ausgebildet sein oder als Einheit, welche frei verfügbare Zeiten, wie eine protokollgemäße Zeit zwischen Erhalt der Daten und transparentem Senden oder eine - von der externen Einheit abhängige Zeit - zwischen dem transparenten Senden der Daten 12 und dem Empfang der Signatur-Anforderung 13. Gesendet wird die erstellte Signatur 15 erst in Antwort auf die Signatur-Anforderung 13.

Eine Prüfinstanz 500 erhält die erstellte Signatur 15 der Kommunikations-Schnittstelle. Die Prüfinstanz 500 verifiziert die Signatur 15 und prüft somit den Ursprung der gesendeten Daten. Wenn die Signatur nicht mit dem der Vorrichtung zugeordneten Schlüssel der Kommunikations-Schnittstelle erstellt ist, schlägt die Prüfung fehl, ansonsten bestätigt die Prüfinstanz die erfolgreiche Prüfung (Bestätigung 16). Dargestellt ist in Figur 2 eine zentrale Prüfinstanz 500 für eine Vielzahl von Anwendungsservern 400. Alternativ ist jedoch auch denkbar, dass die Funktion der Prüfinstanz auf dem Anwendungsserver implementiert wird.

Die Prüfinstanz 500 umfasst einen Schlüsselspeicher, in welchem öffentliche Schlüssel für eine Vielzahl von Vorrichtungen gespeichert sind. Alternativ kann eine Schlüsselgenerierungseinheit eingesetzt werden, soweit der für die Verifikation der Signatur nötige öffentliche Schlüssel der Kommunikations-Schnittstelle, beispielsweise aus einer Identifikation erzeugbar ist. Als Identifikation kann insbesondere eine IMEI verwendet werden. Die Prüfinstanz 500 empfängt die Identifikation zusammen mit oder für die Signatur 15. Für eine empfangene Signatur 15 wird mit Hilfe der Identifikation der Vorrichtung der zugeordneten Schlüssel bestimmt. Die Identifikation kann als optionaler Teil mit der Signatur 15 an die externe Einheit übertragen werden. Ebenso kann die Identifikation in den Transaktionsdaten 31 enthalten sein oder im Anwendungsserver 400 mit Hilfe der Transaktionsdaten 31 bestimmt werden.

Ein Alternative zur Bereitstellung der öffentlichen Schlüssel in der Prüfinstanz wäre die Übertragung des öffentlichen Schlüssels PK (gegebenenfalls zusammen mit dessen Zertifikat) zusammen mit der erstellten Signatur 15.

Die gesendeten Daten 12 könnten der Prüfinstanz als Vergleichswert für die Verifikation dienen. Allerdings führt die Prüfinstanz die Prüfung bevorzugt ohne Kenntnis bzw. ohne Berücksichtigung der gesendeten Daten bzw. des Datenanteils derselben aus. Die gesendeten Daten 12 umfassen einen Datenanteil (D1, D2 ... Dn) und einen - durch das von der Kommunikations-schnittstelle verwendete Protokoll vorgegebenen - Protokollanteil (P1, P2, P3): *DataSent := P1, P2, D1, D2,* ... *Dn, P3.* Der Protokollanteil wird üblicherweise bereits in der Kommunikations-Schnittstelle 210 der externen Einheit 200 unmittelbar verworfen. Damit die Prüfinstanz die Prüfung durchführen kann, wird die empfangene Signatur 15 zusammen mit *DataHash* := *Cryptographic Hash Function*(*DataSent*) an die Prüfinstanz übermittelt. Dabei gilt wiederum *Signature := Encrypt (DataHash, SK).* Bevorzugt wendet die Prüfinstanz den öffentlichen Schlüssel PK auf die empfangene Signatur 15 an und kann somit die Kommunikations-Schnittstelle der Vorrichtung 100 als Ersteller der Signatur bestätigen. Der Vergleich ist erfolgreich falls gilt: *DataHash* = *Decrypt*(*Signature, PK).*

In der Variante ohne Hashfunktion könnte der Protokollanteil (P1, P2, P3) für die Prüfung bis zur Prüfinstanz weitergeleitet werden. Die Signatur wäre *Signature := Encrypt (P1,P2, D1, D2,* ... *Dn, P3, SK).* Eine Anwendung des öffentlichen Schlüssels PK der Kommunikationsschnittstelle ergibt einen Prüfwert: *Decrypt*(*Signature, PK*):= *P1,P2, D1, D2,* ... *Dn, P3.* Die Prüfinstanz kann nun die Werte D1, D2 ... Dn für die Prüfung ignorieren. Die Prüfinstanz verifiziert nur den Protokollanteil P1, P2, P3 und vergleicht diesen mit einem das für das Protokoll der Kommunikations-Schnittstelle vorgegebenen Referenzmuster. Im Rahmen der Prüfung der Signatur wird also anstelle eines festen Referenzwertes (hier: P1,P2, D1, D2, ... Dn, P3) ein protokollgemäßes Referenzmuster (z.B.: *P1*=*0x0A, P2*=*0x1Y mit Y<>0 und P3*>*0x03*) verwendet. In dem Referenzmuster können sitzungsspezifische Werte, wie beispielsweise ein Zähler P3 ebenso wie die Daten D1, D2, ignoriert werden oder auf erlaubte Wertebereiche geprüft werden. Sollte die Länge 1 der gesendeten Daten (P1,P2, D1, D2, ... Dn, P3 => Länge: n+3) größer sein als eine Schlüssellänge m, wird die Kommunikations-Schnittstelle-Signatur für einen ausgewählten Teil (mit der Länge m) der Daten erstellt *Signature* := *Encrypt* (*P1,P2, D1, D2,... Dm-2; SKₘ*)*.* Die Auswahl erfolgt abhängig von den protokollgemäßen Vorgaben und insbesondere derart, dass für die Prüfinstanz ein geeignetes Referenzmuster bereitgestellt werden kann. Im vorliegenden Beispiel werden also die ersten m Bytes Daten ausgewählt, da ihr Protokollanteil P1, P2 eine Prüfung ermöglicht (z.B.: P1=0x0B, P2=0x33), und nicht etwa die letzten m Bytes der Daten, deren Protokollanteil P3 (z.B.: (P3>0x03)) eher unbestimmt ist und eine echte Prüfung nicht erlauben würden.

In der Signaturerzeugungseinheit 113 können die Signatur und/oder die gesendeten Daten vor der Signatur mit einem Schlüssel der Prüfinstanz verschlüsselt werden. Die Prüfinstanz verifiziert die Signatur erst nach Entschlüsselung mit seinem (geheimen) Schlüssel und/oder entschlüsselt die Daten nach Anwendung des öffentlichen Schlüssels der Kommunikations-Schnittstelle noch mit seinem eigenen Schlüssel.

## Patentansprüche

1. Verfahren mit folgenden Schritten zur Verwendung in einem System umfassend eine Vorrichtung (100) mit Steuereinheit (101) und kontaktloser Kommunikations-Schnittstelle (110), einer externen Einheit (200), einem Netzwerk (300), einem Anwendungsserver (400) sowie einer Prüfinstanz (500):
- Erhalten (S1) von Daten in der Kommunikations-Schnittstelle;
- Transparentes Senden (S2) der erhaltenen Daten an die externe Einheit von der Kommunikations-Schnittstelle;
wobei die Vorrichtung (100) eine Signatur für zumindest einen Teil der Daten bereitstellt;
- Erstellen (S4) der Signatur für die Daten in der Kommunikations-Schnittstelle (110), um Kopien von Anwendungen zu erkennen,
wobei die Daten mittels eines geheimen Schlüssels SK der Kommunikationsschnittstelle (110) durch die Kommunikationsschnittstelle (110) signiert werden und die Signatur mit einem öffentlichen Schlüssel PK der Kommunikationsstelle (110) durch die Prüfinstanz verifiziert wird,
wobei der geheime Schlüssel SK mit dem öffentlichen Schlüssel PK ein Schlüsselpaar eines asymmetrischen kryptographischen Algorithmus bildet; und
- die erstellte Signatur und die Daten werden getrennt voneinander von der Kommunikations-Schnittstelle (110) an die externe Einheit übertragen, wobei die erstellte Signatur nach dem Signieren und die gesendeten Daten vor dem Signieren mit einem Schlüssel der Prüfinstanz verschlüsselt werden, welche den Ursprung der Daten mittels der Signatur verifiziert.

2. Verfahren nach Anspruch 1, **gekennzeichnet durch**, den weiteren Schritt in der Kommunikations-Schnittstelle:
- Empfangen (S3) einer Anforderung einer Kommunikations-Schnittstellen-Signatur für die zuvor transparent gesendeten Daten.

3. Verfahren nach Anspruch 1 oder 2, **dadurch gekennzeichnet, dass** in dem Schritt des Erstellens (S4) der Signatur der Inhalt eines Ausgangspuffers der Kommunikations-Schnittstelle signiert wird.

4. Verfahren nach einem der Ansprüche 1 bis 3, **dadurch gekennzeichnet, dass** die Signatur als ein Nachweis für den Ursprung der gesendeten Daten vorgesehen ist.

5. Verfahren nach einem der Ansprüche 1 bis 4, **dadurch gekennzeichnet, dass** die gesendeten Daten in der Kommunikations-Schnittstelle zwischengespeichert werden und in dem Schritt des Erstellens (S4) der Signatur, die zwischengespeicherten Daten signiert werden.

6. Verfahren nach einem der Ansprüche 1 bis 5, **dadurch gekennzeichnet, dass** der Schritt des Erstellens (S4) nach dem Schritt des transparenten Sendens (S2) erfolgt.

7. Verfahren nach einem der Ansprüche 1 bis 6, **dadurch gekennzeichnet, dass** die Signatur - unabhängig von einem flexiblen Datenanteil in den gesendeten Daten - anhand eines durch ein Protokoll der Kommunikations-Schnittstelle vorgegebenen Protokollanteils in den gesendeten Daten zu verifizieren ist.

8. Verfahren nach einem der Ansprüche 1 bis 7, **dadurch gekennzeichnet, dass** in dem Schritt des Erstellens ein geheimer Schlüssel der Kommunikations-Schnittstelle verwendet wird.

9. Verfahren nach einem der Ansprüche 1 bis 8, **dadurch gekennzeichnet, dass** die Daten und die Signatur kontaktlos gesendet werden.

10. Verfahren nach einem der Ansprüche 1 bis 9, **dadurch gekennzeichnet, dass** die Daten und die Signatur mittels eines NFC-Protokolls gesendet werden.

11. Verfahren nach einem der Ansprüche 1 bis 10, **dadurch gekennzeichnet, dass** die erstellte Signatur die transparent gesendeten Daten betrifft.

12. System umfassend eine Vorrichtung (100) mit einer Steuereinheit (101) und kontaktloser Kommunikations-Schnittstelle (110), einer externen Einheit (200), einem Netzwerk (300), einem Anwendungsserver (400) sowie einer Prüfinstanz (500), angepasst zur Ausführung eines Verfahrens nach einem der Ansprüche 1 bis 11.

## Claims

1. Method comprising the following steps for use in a system comprising a device (100) with a control unit (101) and contactless communication interface (110), an external unit (200), a network (300), an application server (400), and a testing instance (500):
- Receiving (S1) data in the communication interface;
- Transparently sending (S2) of the received data to the external unit by the communication interface; wherein the device (100) provides a signature for at least a portion of the data;
- Creating (S4) the signature for the data in the communication interface (110) to recognize copies of applications,
wherein the data is signed by means of a secret key SK of the communication interface (110) by the communication interface (110) and the signature is verified by means of a public key PK of the communication interface (110) by the testing instance,
wherein the secret key SK forms with the public key PK a key pair of an asymmetric cryptographic algorithm; and
- the created signature and the data are sent separate from each other from the communication interface (110) to the external unit, where the created signature is encrypted after signing and the sent data is encrypted before signing with a key of the testing instance, which verifies the origin of the data by means of the signature.

2. The method of claim 1, **characterized by** the further step in the communication interface:
- Receiving (S3) a request for a communication interface signature for the previously transparently sent data.

3. The method according to claim 1 or 2, **characterized in that** in the step of creating (S4) the signature the content of an output buffer of the communication interface is signed.

4. The method according to any one of claims 1 to 3, **characterized in that** the signature is provided as a proof of the origin of the sent data.

5. The method according to any one of claims 1 to 4, **characterized in that** the sent data is cached in the communication interface and the cached data is signed in the step of signature creation (S4).

6. The method according to any one of claims 1 to 5, **characterized in that** the step of creating (S4) occurs after the step of transparently sending (S2).

7. The method according to one of the claims 1 to 6, **characterized in that** the signature - independent of a flexible data portion in the sent data - is to be verified on the basis of a protocol portion in the sent data, which is specified by a protocol of the communication interface.

8. The method according to one of the claims 1 to 7, **characterized in that** in the step of creating a secret key of the communication interface is used.

9. The method according to any one of claims 1 to 8, **characterized in that** the data and signature are sent contactless.

10. The method according to one of the claims 1 to 9, **characterized in that** the data and the signature are sent by means of an NFC protocol.

11. The method according to one of the claims 1 to 10, **characterized in that** the created signature relates to the transparently sent data.

12. System comprising a device (100) with a control unit (101) and contactless Communication interface (110), an external unit (200), a network (300), an application server (400), and a testing instance (500), adapted to execute of a method according to one of claims 1 to 11.

## Revendications

1. Procédé comprenant les étapes suivantes, pour utilisation dans un système comprenant un dispositif (100) doté d'une unité de commande (101) et d'une interface de communication (110) sans contact, d'une unité externe (200), d'un réseau (300), d'un serveur d'application (400) ainsi que d'une instance de contrôle (500) :
- obtention (S1) de données dans l'interface de communication ;
- envoi (S2) transparent, par l'interface de communication, des données obtenues à l'unité externe ; cependant que le dispositif (100) met à disposition une signature pour au moins une partie des données ;
- génération (S4) de la signature pour les données dans l'interface de communication (110) afin de reconnaître des copies d'applications,
cependant que les données sont signées par l'interface de communication (110) au moyen d'une clé secrète SK de l'interface de communication (110), et la signature est vérifiée par l'instance de contrôle avec une clé publique PK de l'interface de communication (110),
cependant que la clé secrète SK constitue avec la clé publique PK une paire de clés d'un algorithme cryptographique asymétrique ;
et
- la signature générée et les données sont transmises séparément l'une des autres par l'interface de communication (110) à l'unité externe,
cependant que la signature générée est cryptée après avoir signé et les données envoyées sont cryptées avant avoir signé, avec une clé de l'instance de contrôle, laquelle vérifie l'origine des données au moyen de la signature.

2. Procédé selon la revendication 1, **caractérisé par** l'autre étape dans l'interface de communication :
- réception (S3) d'une demande d'une signature d'interface de communication (110) pour les données envoyées auparavant de manière transparente.

3. Procédé selon la revendication 1 ou 2, **caractérisé en ce que**, à l'étape de la génération (S4) de la signature, le contenu d'un tampon de sortie de l'interface de communication est signé.

4. Procédé selon une des revendications de 1 à 3, **caractérisé en ce que** la signature est prévue en tant qu'une preuve de l'origine des données.

5. Procédé selon une des revendications de 1 à 4, **caractérisé en ce que** les données envoyées sont mémorisées de manière intermédiaire dans l'interface de communication, et, à l'étape de la génération (S4) de la signature, les donnée mémorisées de manière intermédiaire sont signées.

6. Procédé selon une des revendications de 1 à 5, **caractérisé en ce que** l'étape de la génération (S4) a lieu après l'étape de l'envoi (S2) transparent.

7. Procédé selon une des revendications de 1 à 6, **caractérisé en ce que** la signature est - indépendamment d'une partie flexible de données dans les données envoyées - à vérifier au moyen d'une partie de protocole, dans les données envoyées, prédéterminée par un protocole de l'interface de communication.

8. Procédé selon une des revendications de 1 à 7, **caractérisé en ce que**, à l'étape de la génération, une clé secrète de l'interface de communication (110) est utilisée.

9. Procédé selon une des revendications de 1 à 8, **caractérisé en ce que** les données et la signature sont envoyées sans contact.

10. Procédé selon une des revendications de 1 à 9, **caractérisé en ce que** les données et la signature sont envoyées au moyen d'un protocole NFC.

11. Procédé selon une des revendications de 1 à 10, **caractérisé en ce que** la signature générée concerne les données envoyées de manière transparente.

12. Système comprenant un dispositif (100) doté d'une unité de commande (101) et d'une interface de communication (110) sans contact, d'une unité externe (200), d'un réseau (300), d'un serveur d'application (400) ainsi que d'une instance de contrôle (500), adapté à l'exécution d'un procédé selon une des revendications de 1 à 11.
